# EUROPÄISCHE PATENTANMELDUNG

(11) **EP 0 531 584 A1**
(43) Veröffentlichungstag der Anmeldung: **17.03.1993**
(21) Anmeldenummer: 91203537.5
(22) Anmeldetag: 03.12.1991
(51) Int. Cl.: C03C 23/00, C03C 21/00, B41M 1/34, B41M 5/28

(54) **Verfahren zur Beschriftung oder Dekoration von transparenten Substraten mit einem Laser**

(30) Priorität: 03.12.1990 CS 5988/90
(71) Anmelder: GLAS GLAS UND LASER APPLIKATION SYSTEME, CS-911 00 Trencin (CS)
(72) Erfinder: Kvapil, Jiri, Dr., 511 01 Turnov (CS); Kvapil, Josef, 511 0111 Turnov (CS); Perner, Bohumil, 511 01 Turnov (CS); Koselja, Michal, 511 01 Turnov (CS); Urbanek, Peter, 911 00 Trencin (CS); Krendl, Augustin, Dr., 911 00 Trencin (CS)
(74) Vertreter: Fuchs, Franz-Josef, Dr.-Ing.

(57) **Zusammenfassung**

Um eine Laserbeschriftung oder eine Laserdekoration von transparenten Substraten mit einem Neodym-Laser zu ermöglichen, wird gemäß der Erfindung auf das Substrat eine Hilfsschicht aufgetragen, die zwei Arten von Übergangsmetallionen enthält, die sich in ihrer Wertigkeit oder Ordnungszahl unterscheiden. Die Laserstrahlung wird in der Hilfsschicht absorbiert und wirkt dadurch indirekt auf das Substrat ein. Auf diese Weise kann auch bei höheren Beschriftungsgeschwindigkeiten ein gleichmäßiges Schriftbild erzeugt werden.

## Beschreibung

Die Erfindung bezieht sich auf ein Verfahren zur Beschriftung oder Dekoration von transparenten Substraten, insbesondere Erzeugnissen aus Glas, mit einem Laser.

Es ist bekannt, Substrate, wie beispielsweise farbloses Glas, die für sichtbare oder infrarotnahe elektromagnetische Strahlung transparent sind, mit einer Laserstrahlung eines CO₂-Lasers, deren Wellenlänge etwa 10,6 µm beträgt, zu beschriften. Um eine Beschriftung von transparentem Glas mit einer Laserstrahlung im Wellenlängenbereich zwischen 0,3 µm und 1,6 µm, beispielsweise mit der Laserstrahlung eines Neodym-Lasers, der bei einer Wellenlänge von etwa 1 µm emittiert, zu ermöglichen, ist es bekannt, die Oberfläche des Glases mit einer Schicht zu versehen. Diese Hilfsschicht enthält Ionen eines Übergangselementes, die diese Laserstrahlung absorbieren.

Bei den bekannten Verfahren wird die Beschriftung durch Rillen in der Glasoberfläche gebildet, die eine matte oder muschelförmige Oberfläche haben. Die Qualität dieser Beschriftung ist jedoch vor allem bei höheren Beschriftungsgeschwindigkeiten unbefriedigend, weil die anfangs in der Regel niedrige Absorption der Laserstrahlung in der Oberfläche undefinierbar mit der Bestrahlungsintensität und der Dauer der Bestrahlung wächst und somit ein unregelmäßiges Schriftbild verursacht.

Der Erfindung liegt nun die Aufgabe zugrunde, ein Verfahren zur Laserbeschriftung und Laserdekoration von Substraten anzugeben, bei dem eine Laserstrahlung verwendet wird, deren Wellenlänge in einem Wellenlängenbereich liegt, in dem diese Substrate transparent sind und die auch bei höheren Beschriftungsgeschwindigkeiten ein regelmäßiges Schriftbild ermöglicht.

Die genannte Aufgabe wird gelöst mit einem Verfahren zur Beschriftung oder Dekoration der Oberfläche eines im Beschriftungs- oder Dekorationsbereich transparenten Substrates, insbesondere eines Substrates aus Glas, mit folgenden Merkmalen:
a) auf die Oberfläche des Substrates wird wenigstens im Beschriftungs- oder Dekorationsbereich eine Hilfsschicht aufgetragen,
b) die Hilfsschicht enthält wenigstens zwei Arten von Ionen von Übergangselementen, die sich in ihrer Wertigkeitsstufe oder Ordnungszahl unterscheiden,
c) der mit dieser Hilfsschicht versehene Beschriftungs- oder Dekorationsbereich wird mit einer Laserstrahlung mit einer Wellenlänge zwischen 0,3 µm und 1,6 µm bestrahlt.

Die Ionen können sich somit in ihrer Wertigkeit oder in ihrer Ordnungszahl oder in ihrer Wertigkeit und Ordnungszahl unterscheiden.

Als Übergangselemente oder Übergangsmetalle sind die Elemente der Nebengruppen des periodischen Systems zu verstehen. Dies sind insbesondere die Elemente der ersten bis dritten Nebengruppe mit den Ordnungszahlen 21 - 30, 39 - 48 und 57 - 80.

Die Ionen können in der Hilfsschicht in dissoziierter oder in gebundener Form in einer Ionenverbindung vorliegen. Die Hilfsschicht enthält somit stets wenigstens zwei Arten von Übergangsmetallionen, die sich in ihrer Wertigkeit oder in ihrer Ordnungszahl unterscheiden. Dabei kann durch die Einwirkung des Laserstrahles auf die Hilfsschicht eine Dissoziation der in der Hilfsschicht vorliegenden chemischen Verbindungen verursacht werden.

Der Laserstrahl wird in der Hilfsschicht absorbiert. Durch die während der Bestrahlung in der Hilfsschicht stattfindenden physikalisch-chemischen Prozesse steigt die Absorption in der Hilfsschicht an. In der Hilfsschicht entsteht ein erhitztes Plasma, das bearbeitend auf das Substrat einwirkt. Die Absorption der Laserstrahlung in der aufgetragenen Hilfsschicht verursacht somit eine indirekte Interaktion des Laserstrahles mit dem transparenten Material und die aufgetragene Hilfsschicht ist nur während der Einwirkung des Laserstrahles aktiv. Nach der Bearbeitung kann die Hilfsschicht entfernt werden.

Die Laserstrahlung wird von der aufgetragenen Hilfsschicht leicht und unabhängig von der Schichtdicke absorbiert und das Ansteigen der Absorption vollzieht sich in sehr kurzer Zeit. Dies wird verursacht durch einen durch Absorption induzierten Ladungsübergang zwischen gleichen Ionen unterschiedlicher Wertigkeitsstufen, beispielsweise zwischen Ti³⁺ und Ti⁴⁺, oder unterschiedlichen Ionen in gleichen Wertigkeitsstufen, beispielsweise Ti³⁺ und Fe³⁺.

Die Ionen können in Form von Oxidgemischen oder deren Verbindungen, z.B. CoCr₂O₄, FeTiO₃, in Form von Mischoxiden oder in Form löslicher oder unlöslicher Salze vorliegen.

Entsprechend dem Adhäsionsbedarf des zu beschriftenden Materials kann die Hilfsschicht außerdem Wasser, Alkohol, Anfeuchtungs- oder Bindemittel enthalten.

Weitere die Eigenschaften der Schicht vorteilhaft beeinflussender Bestandteile sind z.B. Stoffe wie Zucker, die insbesondere bei Schichten, die jeweils nur ein Übergangselement, beispielsweise nur Fe oder nur Ti enthalten, sicherstellen, daß dieses in der Hilfsschicht nicht nur mit der Höchstwertigkeit, z.B. Fe³⁺ oder Ti⁴⁺, sondern auch in einer Wertigkeitsstufe vorkommt, die niedriger als die Höchstwertigkeit des betreffenden Elements ist, beispielsweise Fe²⁺ bzw. Ti³⁺. Die Zucker wirken dabei wie ein Reduktionsmittel. Unter Höchstwertigkeit ist die höchste Wertigkeitsstufe zu verstehen, in deren das betreffende Element in der Natur vorkommt.

Mit Hilfe des Verfahrens gemäß der Erfindung ist es möglich, die Oberfläche von Glas oder anderer durchsichtiger oder nur gering absorbierender Materialien so zu behandeln, daß eine zuverlässige Beschriftung mittels der Strahlung eines Festkörperlasers mit breiten Möglichkeiten der Formvariation gewährleistet ist. Gegebenenfalls können auch Rillen gebildet werden, an denen das Glas zum Beispiel gebrochen werden kann.

Vorzugsweise liegen in der Hilfsschicht die Ionen unterschiedlicher Wertigkeitsstufen oder unterschiedlicher Ordnungszahl zueinander in einem Atomverhältnis vor, das höchstens 800 : 1 beträgt.

Der Gesamtgehalt der Ionen in der Hilfsschicht beträgt nach Trocknung an Luft bis zum konstanten Gewicht vorzugsweise wenigstens 3 Gew.-%.

Insbesondere sind in der Hilfsschicht Ionen der Elemente der ersten Nebengruppe, insbesondere die Elemente mit den Ordnungszahlen 22 - 29, das sind die Elemente Titan Ti bis Kupfer Cu, vorgesehen.

In einer vorteilhaften Ausgestaltung des Verfahrens wird die Laserstrahlung eines Neodym-Lasers verwendet.

Vorzugsweise wird die Hilfsschicht nach Auftragen auf das Substrat an Luft getrocknet.

Nach erfolgter Bestrahlung wird die Hilfsschicht entfernt, beispielsweise mit Alkohol oder Wasser abgewaschen, oder mechanisch abgetragen.

Mit dem Verfahren gemäß der Erfindung können transparente Substrate aus Glas und aus Kunststoff, beispielsweise Polymethylmetacrylat PMMA beschriftet oder dekoriert werden.

Zur weiteren Erläuterung der Erfindung wird auf die nachfolgenden Beispiele verwiesen.

### Beispiel 1

Wasserfreies Titandioxid TiO₂ mit einem Gehalt von 0.5 Gew.-% von dreiwertigen Eisenionen wurde in einer Achatschale zerrieben und dann in Äthylalkohol suspendiert. Das Atomverhältnis Ti⁴⁺ zu Fe³⁺ betrug 148.8. Diese Suspension wurde mit einem Pinsel auf ein Natronkalkglasplättchen aufgetragen. Nach dem Abtrocknen wurde dieses Plättchen mit einem modulierten Neodym-Laser-Strahlung beschriftet, deren Impulse eine Länge von 120ns hatten. Die Pulsfrequenz betrug bei einer Durchschnittsleistung von 3.5 W etwa 800 Hz. Die Spurbreite betrug bei einer Beschriftungsgeschwindigkeit von 5m/s etwa 0,3 mm. Die Beschriftung war regelmäßig und von guter Qualität. Bei Verwendung von Titandioxid TiO₂ mit 99.99 % Reinheit war eine Beschriftung nicht möglich.

### Beispiel 2

In eine Lösung von FeSO₄.7H₂O und NiSO₄.7H₂O mit einem Gehalt von 12% Ionen Fe²⁺ und Ni²⁺ deren Gewichtsverhältnis 12,61:27 betrug, wurden 2 Tropfen Saponat pro Liter zugegeben, um die Adhäsion zum Glas zu erhöhen. Diese Lösung wurde auf die Oberfläche von Laborglasgefäßen aus Borosilikatglas aufgetragen. Nach teilweiser Trocknung wurde die Oberfläche mit einem kontinuierlichem Nd:YAG-Laserstrahl bestrahlt. Der Durchmesser des Strahles betrug 2 mm bei einer Leistung von 30 W und einer Beschriftungsgeschwindigkeit von 0,3 m/s. Die Glasbeschriftung war zusammenhängend und hatte ein leicht mattes Aussehen.

Bei Verwendung einer einmolarigen, nur Eisensulfat FeSO₄ enthaltenden Lösung wurden unter sonst gleichen Bedingungen nur unregelmäßige Markierungen in Form von muschelartigen Spuren auf dem Glas abgebildet.

### Beispiel 3

In einer Achatschale wurden die Oxide NiO und MnO₂ im atomaren Verhältnis der Ionen 100:1 zerrieben. Aus diesem Gemisch wurde eine Suspension in Äthylalkohol bereitet. Diese Suspension wurde mit Hilfe eines Pinsels auf eine Platte aus Bariumkristall aufgetragen. Nach dem Austrocknen wurde die in dieser Weise behandelte Oberfläche mit einer modulierten Nd:YAG-Laserstrahlung mit folgenden Parametern bestrahlt: Frequenz 10 kHz, Impulslänge 120 ns, Durchschnittsleistung 8 W, Spurbreite 0.05 mm, Beschriftungsgeschwindigkeit 150 mm/s.

### Beispiel 4

In einer Achatschale wurden die Oxide CuO und CrO₃ im atomaren Verhältnis der Ionen 100 : 1 zerrieben. Aus diesem Gemisch wurde eine Suspension in Wasser zubereitet. Diese Suspension wurde mit Hilfe von einem Pinsel auf ein Plättchen aus Natronkalkglas aufgetragen. Nach Trocknung im Ofen bei 150°C haben wir diese Plättchen mit einer Nd:YAG-Impulslaserstrahlung mit forgenden Parametern bestrahl: Impulsenergie 100 mJ, Impulslänge 0,1 ms, Frequenz 10 Hz, Spurbreite 0,1 mm. Bei einer Beschriftungsgeschwindigkeit von 50 mm/s war die Glasoberfläche ähnlich zerstört wie nach Sandstrahlen oder nach einer chemischen Mattierung.

### Beispiel 5

V₂O₅ und Co₂O₃ wurden im atomaren Verhältnis der Ionen 1 : 300 in einer Achatschale zerrieben. Aus diesem Gemisch wurde eine Suspension in Äthylalkohol zubereitet. Diese Suspension wurde dann auf ein 1 mm dickes Glasplättchen aufgetragen. Nach Austrocknen wurde das Glas mit einer Nd:YAG-Impulslaserstrahlung mit folgenden Parametern bestrahlt: Impulsenergie 10 J, Impulslänge 5 ms, Spurbreite 0,1 mm. In diesem Fall wurde die Glasplatte mit einem Laserimpuls durchgebohrt. War die Glasplatte mit der beschriebenen Schicht nicht versehen, ging der Laserimpuls praktisch ohne Absorption durch die Platte.

### Beispiel 6

Titandioxid der Reinheit 99,99 % wurde für 40 Minuten bei einer Temperatur von 780 °C in einer Atmosphäre erhitzt, die 98 Vol.-% Argon Ar und 2 Vol.-% Wasserstoff H₂ enthalten hat. Es entstand ein blaubraunes Pulverprodukt, das ein Gemisch von Oxiden von Ti³⁺ und Ti⁴⁺ war. Analytisch wurde festgestellt, daß das Pulver Ti⁴⁺ und Ti³⁺ Ionen im atomaren Verhältnis 10 : 3 enthielt. Eine Suspension dieses Pulvers in Äthylalkohol wurde auf den Rand eines Brillenglases aufgetragen. Nach Austrocknen wurde das Glas auf dieser Stelle mit Hilfe einer modulierten Strahlung eines Nd:YAG-Lasers beschriftet. Die benutzten Parameter waren: Frequenz 10 kHz, Impulslänge 220 ns, Durchschnittsleistung 3,2 W, Spurbreite 0,03 mm, Beschriftungsgeschwindigkeit 110 mm/s. Es entstand eine sichtbare Beschriftung, die einem matten Schliff ähnelte.

### Beispiel 7

Für die Beschriftung von Trinkgläsern mit Hilfe eines Nd:YAG-Lasers, wobei die Parameter für die Bestrahlung dieselben wie im Beispiel 6 waren, wurden Wasser-Alkohol-Lösungen mit Gehalt von 5 Gew.-% K₄Fe(CN)₆ oder K₃Fe(CN)₆ benutzt. Die Beschriftung wurde nach Austrocknen der auf die Glasoberfläche aufgebrachten Lösungen durchgeführt. Die Resultate waren nicht gut reproduzierbar. Die Beschriftung war in beiden Fällen stark unregelmäßig. Bei Benutzung einer Wasser-Alkoholsuspension, die 5 Gew.-% von Fe₄[Fe(CN)₆]₃ enthielt, und in der Ionen Fe³⁺ und Fe²⁺ im atomaren Verhältnis von 4 : 3 vertreten waren, war die Beschriftung regelmäßig, ohne Fehler und leicht gelb gefärbt.

## Patentansprüche

1. Verfahren zur Beschriftung oder Dekoration von der Oberfläche eines im Beschriftungs- oder Dekorationsbereich transparenten Substrates, insbesondere eines Substrates aus Glas, mit folgenden Merkmalen:
a) auf die Oberfläche des Substrates wird wenigstens im Beschriftungs- oder Dekorationsbereich eine Hilfsschicht aufgetragen,
b) die Hilfsschicht enthält wenigstens zwei Arten von Ionen von Übergangselementen, die sich in ihrer Wertigkeitsstufe oder Ordnungszahl unterscheiden,
c) der mit dieser Hilfsschicht versehene Beschriftungs- oder Dekorationsbereich wird mit einer Laserstrahlung mit einer Wellenlänge zwischen 0,3 µm und 1,6 µm bestrahlt.

2. Verfahren nach Anspruch 1, **dadurch gekennzeichnet**, daß die zwei Ionen zueinander in einem Atomverhältnis vorliegen, das höchstens 800 : 1 beträgt.

3. Verfahren nach Anspruch 1 oder 2, **dadurch gekennzeichnet**, daß der Gesamtgehalt dieser Ionen in der Hilfsschicht nach Trocknung an Luft bis zum konstanten Gewicht wenigstens 3 Gew.-% beträgt.

4. Verfahren nach einem der vorhergehenden Ansprüche, **dadurch gekennzeichnet**, daß als Übergangselemente Elemente mit den Ordnungszahlen 22 - 29, das sind die Elemente Titan Ti bis Kupfer Cu, vorgesehen sind.

5. Verfahren nach einem der vorhergehenden Ansprüche, **dadurch gekennzeichnet,** daß die Laserstrahlung eines Neodym-Lasers verwendet wird.

6. Verfahren nach einem der vorhergehenden Ansprüche, **dadurch gekennzeichnet**, daß nach Auftragen der Hilfsschicht auf das Substrat eine Trocknung an Luft durchgeführt wird.

7. Verfahren nach einem der vorhergehenden Ansprüche, **dadurch gekennzeichnet**, daß die Hilfsschicht nach erfolgter Laserbestrahlung entfernt wird.

8. Verfahren zur Beschriftung und Dekoration von transparenten Materialien mit Hilfe von Neodym-Lasern, hauptsächlich Erzeugnissen aus Glas mit einer Hilfsschicht, die die im Bereich von 0.3 µm bis 1.6 µm generierte Laserstrahlung absorbiert, wobei die Hilfsschicht nur während der Interaktion mit dem Laserstrahl aktiv ist, **gekennzeichnet** durch das Auftragen einer Hilfsschicht auf die Erzeugnissoberfläche, die mindestens zwei Arten von Ionen von Nebengruppenelementen mit Atomzahlen 22 bis 29, die sich durch Wertigkeit oder Art des Elementes gegenseitig unterscheiden, enthält, wobei das höchste atomare Verhältnis von mindestens zwei dieser Ionen 800:1 beträgt und der Gesamtgehalt derselben Ionen im Stoff der Materialschicht nach Trocknung bis zum konstanten Gewicht auf der Luft mindestens 3 Gewichtsprozente beträgt, wobei die Interaktion der Laserstrahlung mit der aufgetragenen Hilfsschicht, die aufgrund einer exzitierten Absorbierung vorgeht, wobei durch die Hilfsschicht eine Interaktion der Laserstrahlung mit dem transparenten Material verursacht wird.
